# EUROPEAN PATENT SPECIFICATION

(11) **EP 4 234 383 B1**
(45) Date of publication and mention of the grant of the patent: **23.10.2024**
(21) Application number: 22159304.9
(22) Date of filing: 28.02.2022
(51) Int. Cl.: B62M 9/126, F16H 55/14

(54) **PULLEY FOR A REAR DERAILLEUR OF A BICYCLE**
RIEMENSCHEIBE FÜR EINE KETTENSCHALTUNG EINES FAHRRADS
POULIE POUR UN DÉRAILLEUR ARRIÈRE DE BICYCLETTE

(43) Date of publication of application: 30.08.2023
(73) Proprietor: Golec, Marcin, London SW19 2RR (GB)
(72) Inventor: Golec, Marcin, London SW19 2RR (GB)
(74) Representative: Farago-Schauer, Peter Andreas

(56) References cited:
- DE-A1- 102015 215 670
- DE-U1- 29 909 603
- US-A- 975 938
- US-B2- 10 253 865

## Description

The present invention relates to a toothed pulley for a rear derailleur of a bicycle carrying on each of its side faces a cushioning ring made of an elastically deformable material and adapted to come in contact with link plates of a roller chain running over the pulley.

A toothed pulley with a ring made of an elastically deformable material is disclosed in US 975 938 A in the form of a sprocket, wherein a circular cushioning rings serve as cushions between the teeth of the sprocket and the link plates of a roller chain trained engaged with the sprocket. As disclosed therein, the circular cushioning rings may have an annular or rectangular cross section. Document US975938A shows the preamble of claim 1.

Further toothed pulleys with respective circular cushioning rings made of an elastically deformable material are disclosed in US 10 253 865 B2 in the form of sprockets of a multi-gear cassette for a rear wheel of a bicycle, wherein the circular cushioning rings dampen the forces produced by the chain members running from the slack span of the chain onto a sprocket. These circular cushioning rings have rectangular cross sections.

The prior art pulleys have the problem that nevertheless they are relatively noisy and buckling in operation.

Bicycle chains of an unconventional type, so-called flattop chains (or AXS chains), are known in the art, wherein the respective tops of the link plates are straight-lines, which enables a narrower chain construction with increased strength and durability.

If such a chain is used in a bicycle having a derailleur, there may be the problem that such a chain has some difficulties to run low-noise and smoothly through the derailleur. In particular, there would be the problem that the operation is very noisy and buckling. Accordingly, it is an object of the present invention to provide a pulley for a bicycle rear derailleur with silencing characteristics which is very low-noise in operation and runs very smoothly also with flattop chains.

The above object and further objects which will become apparent hereinafter are achieved by a pulley having the features of claim 1.

The present invention also provides for a rear derailleur of a bicycle according to claim 14 including the pulley of the invention.

Further advantageous features are set out in the dependent claims.

According to the invention, the pulley is for a bicycle rear derailleur. Such a derailleur usually comprises, as is known in the art, a guide pulley and a tension pulley both being rotatably mounted on a derailleur cage which is movable with respect to the bicycle and adapted to guide and tension a bicycle roller chain in an S-shape feeding to the cassette. The cage can be positioned under the desired sprocket of a multi-gear cassette attached to the hub of a rear wheel of a bicycle by an arm that can swing back and forth under the sprockets. Gear shifting is carried out by moving the arm which transfers the chain from one sprocket to another while pedaling.

According to one aspect of the invention, the pulley includes respective circumferential supports formed adjacent to or in each side face of the pulley, wherein a respective cushioning ring is formed on or in a respective circumferential support. In a side view of the pulley, as seen in the axial direction of the pulley, each cushioning ring has a polygonal outline at the external side thereof, i.e. the face thereof facing the roller chain, and is provided by molding thereof at the circumferential support, wherein the number of corners of the polygon is equal to the number of teeth of the pulley and wherein the corners of the polygon are angularly offset from the centers of the teeth of the pulley by the half angular distance between adjacent teeth of the pulley in the mounted state of the cushioning ring having the polygonal outline.

The circumferential support may be embodied as extending axially away from the side face of the pulley or as a circumferential recess in the side face of the pulley. It is also envisaged that the circumferential support is embodied as combination of sections extending axially away from the side of the pulley and circumferentially recessed sections in the side of the pulley. Any circumferential recess may be embodied, at least in part, as a through opening in the pulley.

In the specification, whenever the terms "radial direction" and "axial direction" are respectively used, they intend the radial and the axial directions of the pulley.

Furthermore, in the present specification, the cushioning ring having a polygonal outline at the face thereof facing the roller chain, will be designated as polygonal cushioning ring.

According to the invention, the polygonal cushioning ring having a polygonal outline provided by molding of the polygonal cushioning ring on the circumferential support should be understood as a polygonal cushioning ring developing said polygonal outline due to the molding step, so that the polygonal outline of the polygonal cushioning ring is present in a completed state of or after the molding step.

In the specification, whenever the polygonal cushioning ring is being referred to as being present in a mounted state, this reference should indicate that the polygonal cushioning ring is present on the circumferential support of the pulley after the molding step.

The molding may be performed as by overmolding of the polygonal cushioning ring on the circumferential support of the pulley (and in this case the pulley and circumferential ring are preformed outside the mold) or it may be performed by means of two consecutive molding steps, wherein in a first molding step the pulley including the circumferential support is molded and wherein in a second molding step the polygonal cushioning ring is also formed by molding on the circumferential support. Overmolding and two step molding are well known in the art and will not be described in detail hereinafter. The term "molding" as used herein intends any type of molding, including injection molding, suitable to form the pulley with the circumferential support and/or the polygonal cushioning ring made of the materials described hereinbelow.

Further, the term "outline" is intended to cover manufacturing tolerances or polygons with slightly rounded corners or polygons with otherwise slightly modified corners or polygons with small indentations or modifications in the straight portions.

The polygonal cushioning rings are provided by molding on the respective circumferential support in a rotationally secured manner. The circumferential supports may be advantageously made in one piece with the pulley, for instance in a molding step if the pulley is made of a plastic material or in a metal working step if the pulley is made of metal. Alternatively, particularly if the circumferential supports extend from the pulley, the circumferential supports may be fixedly joined with the pulley. In a further alternative, one of the circumferential supports may be formed in one piece with the pulley and another circumferential support may be fixedly joined to the pulley.

Advantageously, as the polygonal cushioning ring has a polygonal outline at the face facing the roller chain, the outline of the circumferential support may have any shape, as long as the outline of the circumferential support conforms the outline of the polygonal cushioning ring at the face thereof facing the circumferential support. In this way, a decoupling of the shape of the outline of the circumferential support from the shape of the outline of the polygonal cushioning ring at the face facing the roller chain is achieved, as seen in the axial direction.

In view of the decoupling of the respective shapes discussed above, the amount of the material of the polygonal cushioning ring may be increased or adjusted as need be. By increasing the amount of material of the polygonal cushioning ring a more silent operation of the pulley can be achieved as compared to solutions, wherein the cushioning ring is elastically retained on a support and conforms exactly to the outline of the support.

Further, in view of the above discussed decoupling of the respective shapes, the circumferential support may have a different outline, as seen in the axial direction, than the outline of the polygonal cushioning ring at its face facing the roller chain, as seen in the axial direction, as far as shape and/or angular orientation is concerned.

In one embodiment, the circumferential support may have a circular or an elliptical or any outline different from the outline of the polygonal cushioning ring at its face facing the roller chain, as seen in the axial direction. Preferred in terms of manufacturing is a circular or an elliptical outline.

The outline of the circumferential support may be continuous or interrupted and the circumferential support may extend from the pulley or be provided as a circumferential recess in the pulley. Also, combinations, wherein sections of the circumferential support extend from the pulley and sections of the circumferential support are provided as circumferential recesses in the pulley are envisaged. Any circumferential recess can be provided, at least in part, as a through opening in the pulley.

It is also imaginable that the outline of the circumferential support and the outline of the polygonal cushioning ring at the face facing the roller chain, as seen in the axial direction, describe the same geometrical form, i.e., a polygon, but have a different angular orientation. In other words, the shape of the outline of the polygonal cushioning ring at the face facing the roller chain, as seen in the axial direction, may be angularly offset with respect to the shape of the outline of the circumferential support, as seen in the axial direction.

As the outline of the circumferential support, as seen in the axial direction, is freely selectable, as compared to conventional solutions, the degree of rotational security of the polygonal cushioning ring can be adjusted according to the requirements by the free choice of the outline of the circumferential support.

Inasmuch as, the corners of the polygon are angularly offset from the center of the teeth of the pulley, the polygonal cushioning rings have respective straight portions, each straight portion extending under one respective tooth of the pulley and being angularly aligned with the respective tooth of the pulley.

The angular offset of the polygon corners from the teeth is particularly suitable in cases, wherein the derailleur is intended for chains of an unconventional type, wherein tops of the link plates are straight-line which enables a narrower chain construction with increased strength and durability. Such chains are known in the art as AXS or "flattop" chains and are manufactured by the SRAM corporation.

The inventive pulley with polygonal cushioning rings is particularly suited when embodied as a guide pulley of a rear derailleur in conjunction with AXS "flattop" chains devised as mentioned above. In a rear derailleur, the chain is running with the straight tops (flattops) over the guide pulley and the straight tops are perfectly matching the straight portions of the polygonal cushioning ring of the guide pulley. Accordingly, the impact of the chain on the guide pulley is smooth and silent.

While the polygonal cushioning ring according to the invention is particularly advantageous for the guide pulley of a bicycle rear derailleur if used with AXS "flattop" chains, also the tension pulley of a bicycle rear derailleur may advantageously have a polygonal cushioning ring if interacting with the flattop of a "flattop" type chain.

Preferably, the circumferential support, if embodied as extending from the side face of the pulley, may also include a radial extension which extends outwardly in a radial direction from the circumferential support and which forms preferably a flange extending upwardly from the circumferential support.

According to the invention antirotation means are provided for securing the polygonal cushioning ring against a rotation with respect to the circumferential support.

Said antirotation means may be designed as at least one recess extending in the radial direction (in the following radial recess) in the circumferential support with a corresponding protrusion extending in the radial direction (in the following radial protrusion) of material in the polygonal cushioning ring fitting into said recess and/or as at least one radial recess in the polygonal cushioning ring with a corresponding radial protrusion of material in the circumferential support fitting into said radial recess.

Alternatively, said antirotation means may be provided by means of a sinuous or cornered outline of the circumferential support, as seen in the axial direction, and a corresponding inner shape of the polygonal cushioning ring at the face facing the circumferential support.

Also, any complementary shapes, as long as such shapes provide for a rotational security, may be provided. Such complementary shapes may include polygonal shapes, like triangular, square, pentagonal, hexagonal, heptagonal, octagonal, but are not limited to the same.

If the circumferential support is designed in the shape of a polygon, as seen in the axial direction, the corners of the circumferential support can be rounded. The corners of the radial extension of the circumferential support may also be rounded.

The circumferential support and the radial extension may be made in one piece with the pulley, for instance by molding of by metal working. Alternatively, they may be manufactured separately and fixedly joined to the pulley. In a further alternative, the circumferential support and the radial extension at one side of the pulley may be made in one piece with the pulley and the circumferential support and the radial extension at another side of the pulley may be fixedly joined to the pulley.

Each polygonal cushioning ring may advantageously project radially from the radial extension of the circumferential support, preferably by at least 1/4 of the total radial height of the polygonal cushioning ring and more preferably by at least 2/5 of the total radial height of the polygonal cushioning ring.

The straight portions of the polygonal cushioning ring dampen the impact of the chain rollers on the depressions or valleys between consecutive teeth. As known in the art, the depressions or valleys are formed between consecutive teeth of a pulley as seen in the axial direction. Advantageously, the straight portions of the cushioning ring prevent, at least during the initial contact of the chain with the pulley, the contact of the chain rollers with the depressions or valleys between consecutive teeth, such that the polygonal cushioning ring is contacted only by the link plates of the chain. As straight portions of the polygonal cushioning ring are decoupled from the outline of the underlying circumferential support, the amount of cushioning material can be increased and accordingly the silencing or cushioning effect is improved.

The polygonal cushioning rings may have well known cross sections, for example square, rectangular or circular. In a preferred embodiment of the invention each polygonal cushioning ring comprises, at least on its side facing the roller chain, a groove extending along its entire perimeter length, which groove, as seen in a cross-sectional view through the polygonal cushioning ring, is a recess flanked by two protrusions, wherein the protrusions are adapted and orientated to come in contact with outer and inner link plates, respectively, of a roller chain running over the pulley. This further contributes to make the derailleur very silent and smooth running, because by the two protrusions which may be much narrower than the total width of the outer and inner link plates, relatively weak dampening forces can be provided.

In the above preferred embodiment, in a cross-sectional view through the polygonal cushioning ring the protrusions on each polygonal cushioning ring may be curved convexly and may be connected contiguously by the recess which is curved concavely, as seen from inside the polygonal cushioning ring.

The invention is suited for a special form of a bicycle rear derailleur wherein the pulleys are rotatably mounted to the cage by mounting means and an interposed radial bearing, wherein the mounting means are arranged so as to be spaced from the center of rotation of the pulleys and are positioned along a circular mounting opening provided in the cage spaced away from the center of rotation of the pulleys, so as to leave a free space in the center of the pulleys in its mounted state, as described in EP 20177531.9.

The invention is also suited for common bicycle rear derailleurs, wherein, for instance, the pulleys are rotatably mounted between two lateral plates of the cage on central bearings which are fitted on central bolts which connect two lateral plates of the cage to each other.

The polygonal cushioning ring may be made from any elastically deformable material, like natural or synthetic rubber, polymer or elastomer or silicone or mixtures of the foregoing materials having a sufficient dimensional stability to maintain the polygonal outline in the mounted state thereof, i.e., after the molding step of the polygonal cushioning ring on the circumferential support, and in use. The pulley can be made of plastic, metal or a reinforced composite, in particular polyamide reinforced with carbon fiber.

The above and other features of the invention will become apparent from the following description of preferred embodiments, given by way of non-limiting example with reference to the accompanying drawings, wherein:
- Figure 1: is a perspective view of a first embodiment of a pulley of a rear derailleur for a bicycle;
- Figure 2: is the same perspective view as in Figure 1 further showing a part of a roller chain running over the pulley;
- Figure 3: is a plan side view of the arrangement of Figure 2 as seen from a position lying distantly from the pulley on its axis;
- Figure 4: is a sectional view of the pulley of Figure 1 along the line 4-4 in Figure 3;
- Figure 5: is a sectional view of the pulley of Figure 1 along the line 5-5 in Figure 3;
- Figure 6: is a sectional view of the arrangement of Figure 2 along the line 6-6 in Figure 3;
- Figure 7: is a sectional view of the pulley of Figure 1 along a plane intersecting the polygonal cushioning ring molded onto the circumferential support of the pulley in a radial direction;
- Figure 8: is an enlarged sectional view of a radial outer part of the pulley along the line 8-8 in Figure 7, i.e., through the gap between two consecutive teeth of the pulley and through the antirotation means;
- Figure 9: is an enlarged sectional view of a radial outer part of the pulley along the line 9-9 in Figure 7, i.e., through one of the teeth of the pulley;
- Figure 10: is a plan side view of a second embodiment of a pulley of a rear derailleur for a bicycle;
- Figure 11: is a sectional view of the pulley of Figure 10 along the line 11-11 in Figure 10;
- Figure 12: is an enlarged view of Figure 11; and
- Figure 13: is a schematic view of the rear part of a bicycle having a derailleur which is equipped with a tension pulley and a guide pulley as shown in the foregoing Figures 1 to 12.

Conventionally, pulleys of a rear derailleur may be rotatably mounted between two lateral plates of a cage on central bearings which are fitted on central bolts which connect two lateral plates of the cage to each other.

Pulleys as shown and described herein may also be mounted by mounting means (and not by central bolts) and an interposed radial bearing, wherein the mounting means are arranged so as to be spaced from the center of rotation of the pulley. The mounting means are positioned along a circular mounting opening provided in the cage spaced away from the center of rotation of the pulley. Such a bearing, which may be a ball bearing, a roller bearing or a slide bearing, may have a much larger radius than conventional bearings of the pulleys of a rear derailleur. The cage can be a single-plate or a two-plate cage. Such a bearing can be arranged so as to leave a free space in the center of the guide pulley in its mounted state, which provides for a free space which works against the accumulation of dirt because rotating pulley structural arms have been eliminated, and the chain guide is easy to clean. In addition, the free space, if provided at least in the center of the tension pulley, provides for a totally new and impressive look of the derailleur. With respect to this, reference is made to the pertinent teachings of a former patent application of the applicant of the present invention having the title "Improved chain guide for a rear derailleur of a bicycle" filed on May 29, 2020 with the EP as EP 201775319.

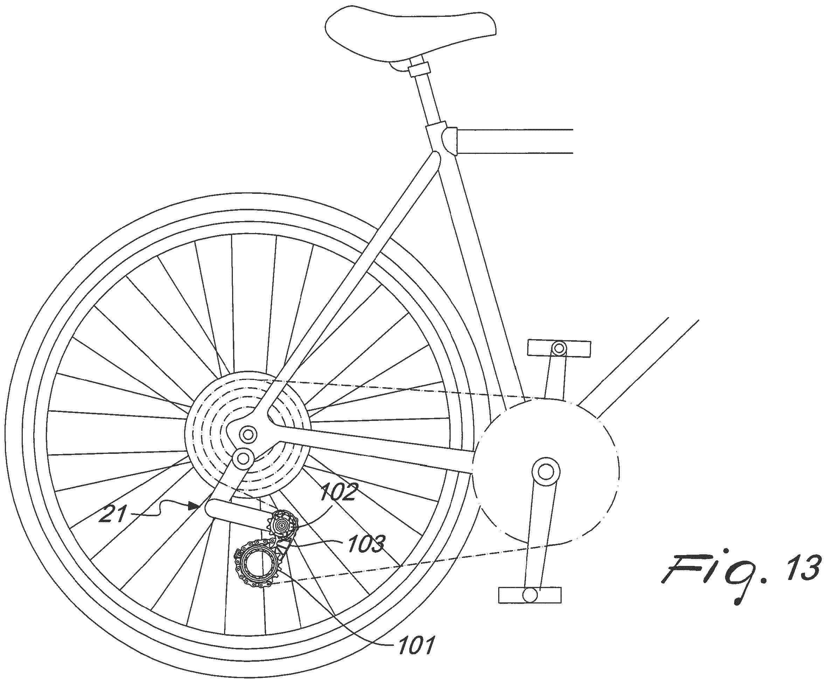

Figure 13 is a schematic view of the rear part of a bicycle having a rear derailleur 100 which comprises a tension pulley 101 and a guide pulley 102 mounted at a cage 103. The pulleys 101 and 102 may optionally each have a free space in their center. The rest of the derailleur 100 is shown only schematically. The cassette is shown also schematically at reference number 104.

Pulleys as shown and described herein may be rotatably mounted between two lateral plates of a cage on central bearings which are fitted on central bolts which connect the two lateral plates of the cage to each other, or rotatably mounted on central bearings which are fitted on a single-plated cage.

Pulleys as shown and described herein may also be rotatably mounted between two lateral plates of a cage by mounting means (and not by central bolts) and an interposed radial bearing, wherein the mounting means are arranged so as to be spaced from the center of rotation of the pulley, as it is the case in EP 20177531.9. Also, in this case the cage may be a single-plated cage, as described in EP 20177531.9.

### PREFERRED EMBODIMENTS

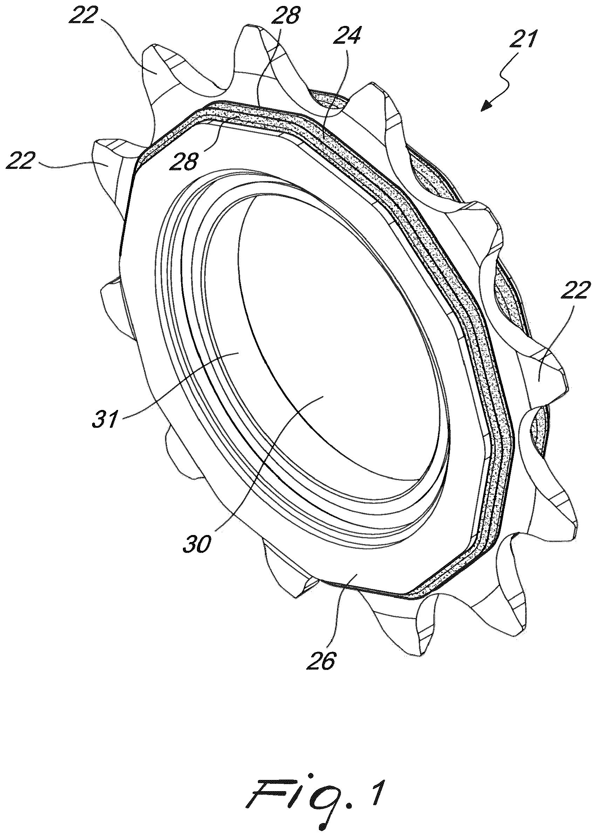

With reference to Figures 1 to 9, a first preferred embodiment of a pulley of a rear derailleur for a bicycle is described.

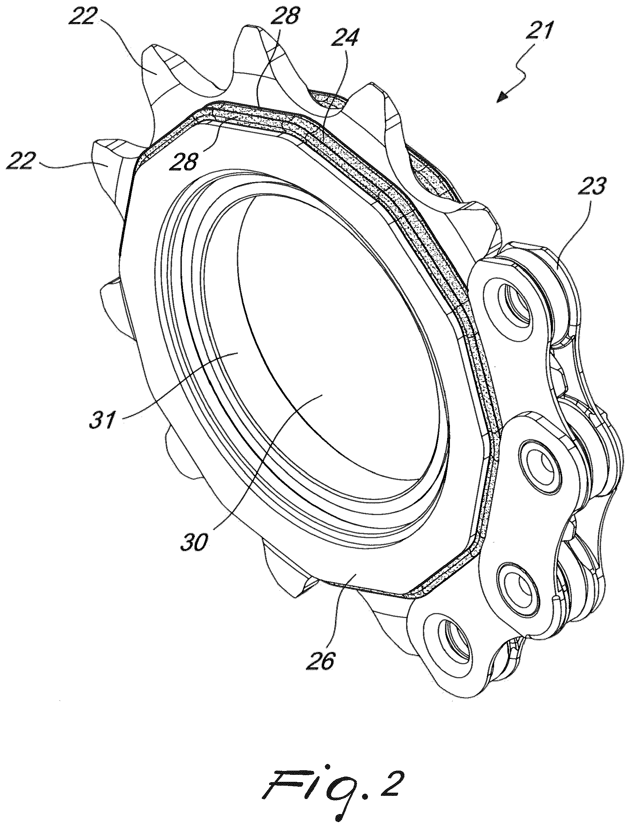

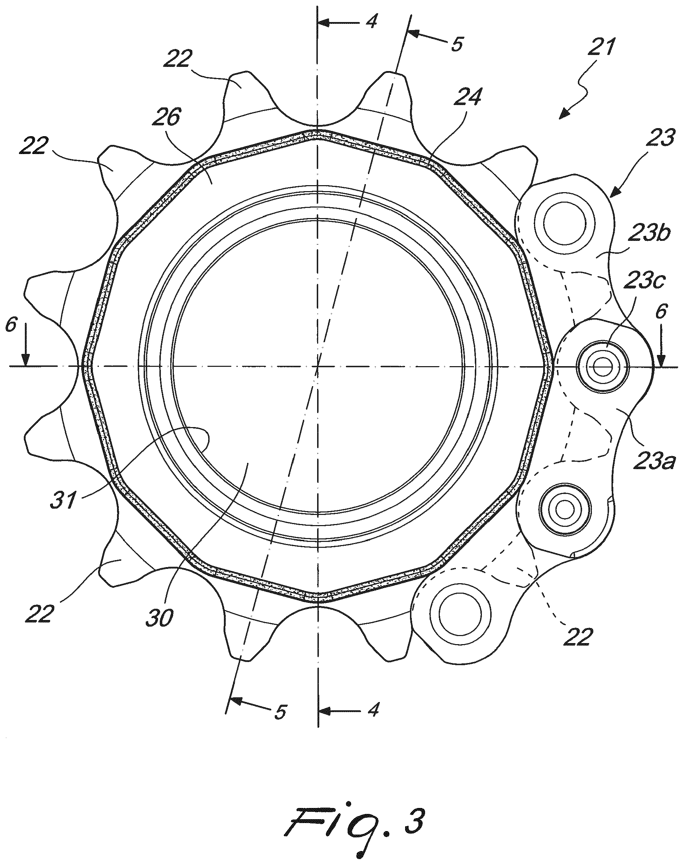

As shown therein, a pulley 21, which is shown as a guide pulley but may also be embodied as a tension pulley, has a plurality of teeth 22 adapted to come in contact with link members of a roller chain 23 running over the pulley 21 (as partially shown in Figures 2 and 3). The roller chain 23 has, as well known in the art, outer link plates 23a, inner link plates 23b und chain rollers 23c held between the inner and outer link plates about respective pins.

The pulley 21 carries on each of its axial side faces a polygonal cushioning ring 24 made of an elastically deformable material like natural or synthetic rubber, polymer or elastomer or silicone or mixtures thereof. The polygonal cushioning ring 24 made of such material has a polygonal shape which is present in the polygonal cushioning ring 24 in the mounted state thereof, i.e., after the molding step of the polygonal cushioning ring 24 onto the circumferential support 25. The material is also such as to maintain the shape of the polygonal cushioning ring 24 in use. The pulley 21 can be made of plastic, metal or a reinforced composite, in particular polyamide reinforced with carbon fiber.

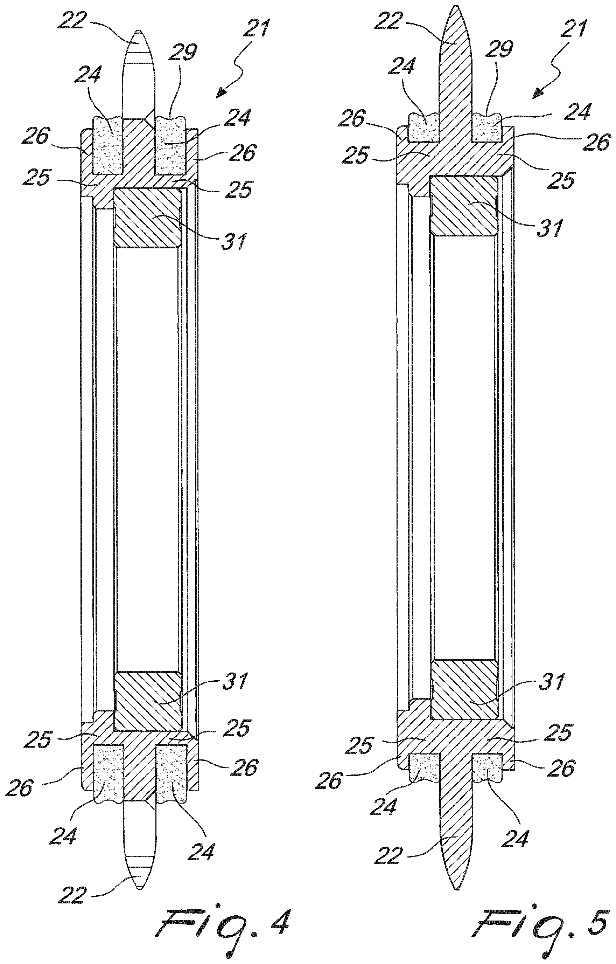

As is best seen in Figures 4 to 6 as well as 8 and 9, each polygonal cushioning ring 24 is supported by and accommodated on a circumferential support 25 formed adjacent to each side face to the pulley 21 and extending axially from the pulley 21. In a side view of the pulley 21, the polygonal cushioning ring 24 has a polygonal outline, wherein the number of corners of the polygon is equal to the number of teeth 22 of the pulley 21. The corners of the polygon are, in the shown mounted state, angularly offset from the centers of the teeth 22 of the pulley 21 by the half angular distance between adjacent teeth 22 of the pulley 21.

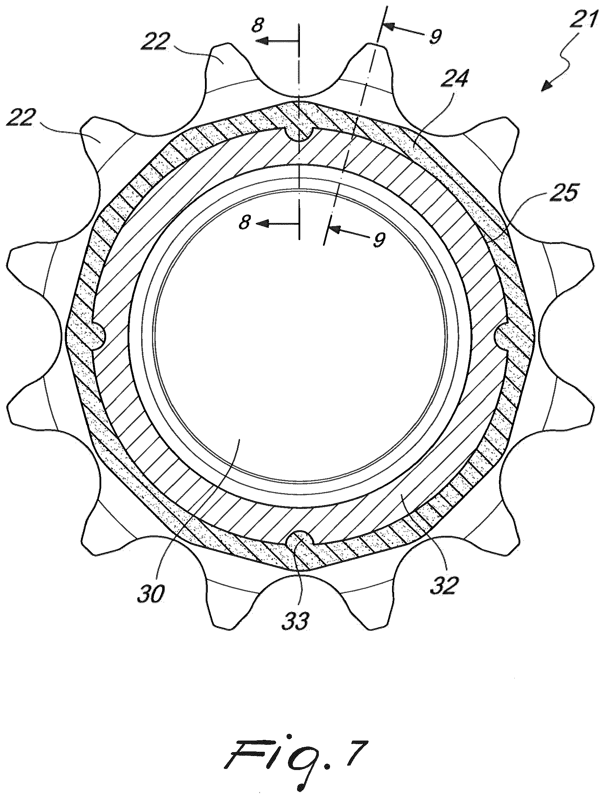

In the view of Figure 4, which is taken along the cross section at line 4-4 of Figure 3, the extension of the polygonal cushioning ring 24 in the radial direction is larger than the extension of the polygonal cushioning ring 24 in the radial direction shown in Figure 5, which is taken at the cross section at lines 5-5 of Figure 3. This is due to the preferred circular outline of the circumferential support 25 shown in Figure 7. Obviously, the extension of the polygonal cushioning ring 24 in the radial direction will vary according to the outline of the circumferential support 25, in view of the polygonal outline of the polygonal cushioning ring 24 at the face facing the roller chain 23.

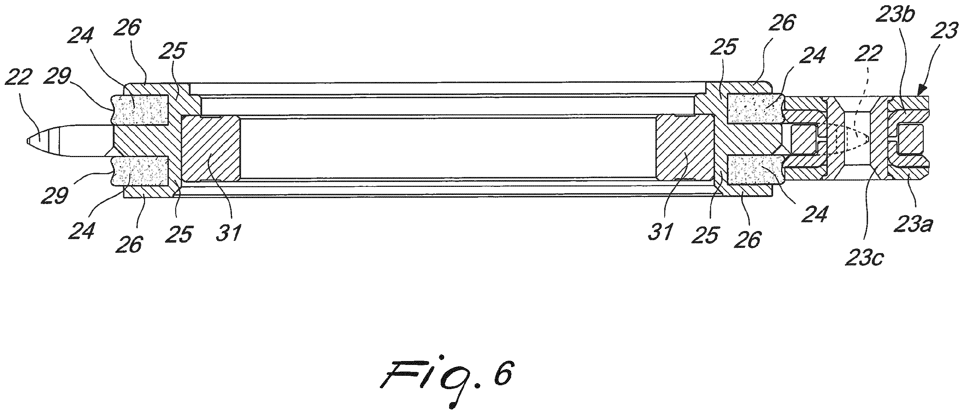

Figure 6 shows a view similar to Figure 4, which is taken along the cross section of line 6-6 of Figure 3. As distinct to Figure 4, the cross section also shows the engagement of the pulley with the roller chain 23.

Although in the embodiments of Figures 1 to 9 the circumferential support 25 is shown as an element extending axially, i.e. in an axial direction, away from the face of the pulley 21, the circumferential support may also be embodied as a circumferential recess in the side face of the pulley 21. It is also envisaged that the circumferential support is embodied as combination of sections extending axially away from the pulley and circumferentially recessed sections in the pulley. Any circumferential recess may be embodied, at least in part, as a through opening in the pulley.

The circumferential support 25 of Figures 1 to 9 may be formed as a continuous shoulder. Preferably, a radial extension 26 is provided extending in a radial direction extending outwardly from the circumferential support 25, such that a seating for the link plates of the roller chain 23 in the polygonal cushioning ring 24 is defined between the side face of pulley 21, the radial extension 26 and the circumferential support 25.

While in the embodiment shown in the Figures 1 to 9 the radial extension 26 is shown as having a polygonal outline, as seen in the axial direction, the person skilled in the art will appreciate that other outlines, as seen in the axial direction, like a polygonal outline with rounded corners, a circular outline, a wave shape outline, a cornered outline or any other outline providing for the required degree of axial retention of the polygonal cushioning ring 24 may be provided. The radial extension 26 in any of the foregoing variations may be provided in portions only of the circumferential support 25. The circumferential support 25 may be a continuous shoulder or interrupted.

Preferably, the circumferential support 25 has an essentially circular outline, as seen in the axial direction, as can be best seen on Figure 7. Nevertheless, the circumferential support 25 may have other outlines, as seen in the axial direction, as long as the outline or its angular orientation is different from the outline of the polygonal cushioning ring 24 at its face facing the roller chain 23. A particularly advantageous outline, in addition to the circular outline, is the elliptical outline. A further advantageous outline is a polygonal outline with rounded corners, as seen in the axial direction.

Also, the circumferential support embodied as a circumferential recess may have any of the foregoing polygonal shapes and/or extensions.

The circumferential support 25 comprises antirotation means 32 which in the embodiment of Figure 7 are shown as radial recesses. Nevertheless, the person skilled in the art will appreciate that the antirotation means 32 can be embodied as radial protrusions. Furthermore, although Figure 7 shows four antirotation means 32, the person skilled in the art will appreciate that the number of antirotation means 32 can be variated to provide that the desired antirotation feature is sufficiently implemented. Same is true if the antirotation means 32 are implemented as radial protrusions. The matching antirotation means on the polygonal cushioning ring 24 is referenced by numeral 33 and is subject to the same variations as the antirotation means 32 of the circumferential support 25.

Furthermore, the antirotation means can be provided by means of any complementary shapes in the circumferential support 25 and the polygonal cushioning ring 24. For instance, the antirotation means can be provided in the shape of a wave or as cornered elements or in the shape of saw tooth or as crenelations. Also, combinations of different types or antirotation means may be provided.

Preferably each polygonal cushioning ring 24 projects radially from the radial extensions 26 by at least approximately 2/5 of a total radial height of the polygonal cushioning ring 24 or by at least 1/4 of a total radial height of the polygonal cushioning ring 24. Advantageously, the compressibility and height of the polygonal cushioning ring 24 has to be chosen so that in operation the link plates of the roller chain 23 may contact the polygonal cushioning ring 24 but not the radial extensions 26.

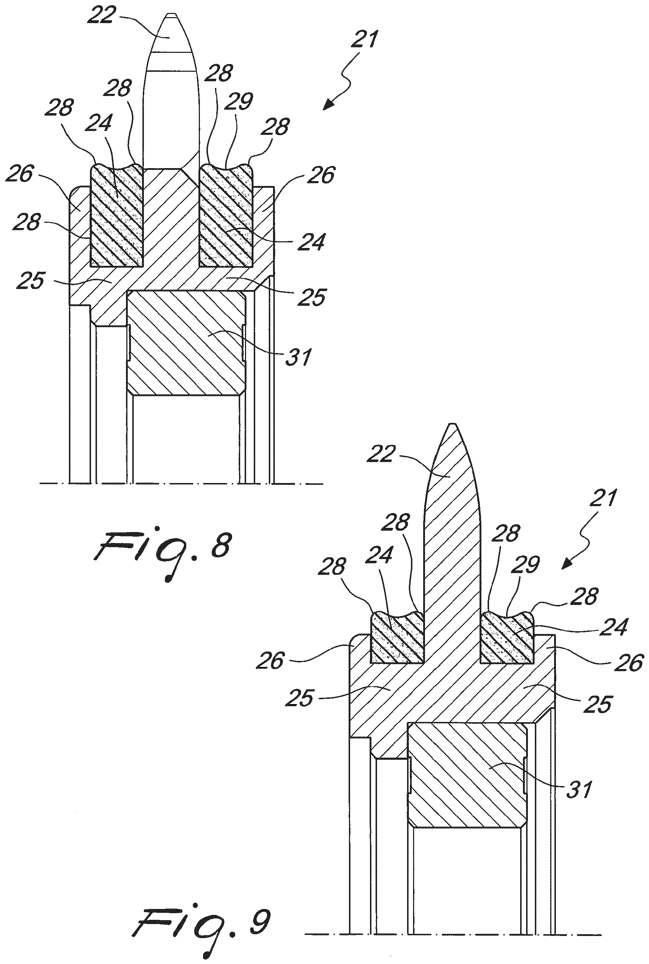

Figures 8 and 9 are respective enlarged sectional views of a radial outer part of the pulley along the line 8-8 in Figure 7, i.e., through the gap between two consecutive teeth of the pulley and through the antirotation means, and along the line 9-9 in Figure 7 through the center of a tooth where the antirotation means are missing. Due to the missing antirotation means in Figure 9, the circumferential support 25 is larger. Further, in a similar manner to Figures 4 and 5, the respective cross sections of the polygonal cushioning ring 24 have different extensions in the radial direction.

As seen best in Figures 8 and 9, preferably, the polygonal cushioning ring 24 comprises, at its side facing the roller chain 23, one groove extending along its entire perimeter length. Advantageously, the groove, as seen in a cross-sectional view through the polygonal cushioning ring 24, is provided by a recess 29 flanked by the two protrusions 28, wherein the protrusions 28 are adapted and orientated to come in contact with outer and inner link plates, respectively, of the roller chain 23 running over the pulley 21. Preferably, additional grooves can be provided at the lateral faces of the polygonal cushioning ring 24 facing the radial extension 26 and/or the pulley 21, respectively.

Further preferably, the protrusions 28 are devised as convexly curved protrusions and the recess 29 is devised as a concavely curved recess, as seen from inside the polygonal cushioning ring 24. The convexly curved protrusions 28 are connected contiguously by the concavely curved recess 29. Accordingly, the polygonal cushioning ring 24 is molded onto the pulley 21 in a manner and orientation in which the two curved protrusions 28 and the one concavely curved recess 29 partially face the outer and inner link plates, respectively, of a roller chain 23 running over the pulley 21. The inner protrusion 28 is able to contact and dampen the inner link plates of the roller chain 23, and the outer protrusion 29 is able to contact and dampen the outer link plates of the roller chain 23.

Generally speaking, the function of the groove at the face of the polygonal cushioning ring 24 facing the roller chain 23 is to dampen the forces produced by chain members running from the slack span of the roller chain 23 onto the pulley 21 in a smooth and well-defined manner and with fewer losses than cushioning rings having conventional annular or rectangular cross sections.

Otherwise, the cross section of the polygonal cushioning ring 24 shown in Figures 8 or 9 may have three even sides.

As shown in the embodiment of Figures 1 to 9, the polygonal cushioning rings 24 comprise a number of straight portions being equal to the number of teeth 22 of the pulley 21 and the straight portions are angularly aligned with one respective tooth 22 in the mounted state of the polygonal cushioning rings 24.

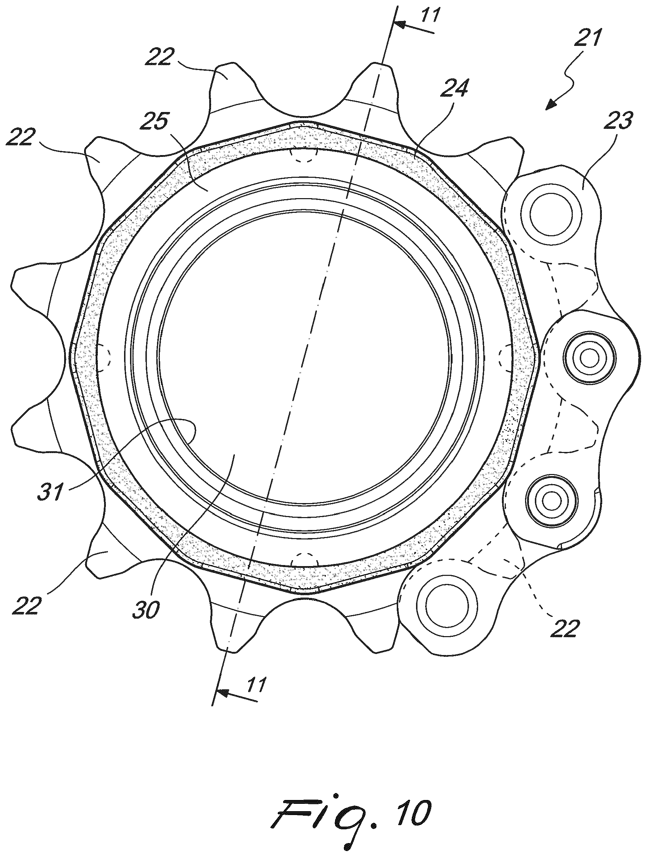

With reference to Figures 10 to 12, a second preferred embodiment of a pulley of a rear derailleur for a bicycle is described, wherein the radial extension 26 is omitted. Otherwise, the second embodiment of Figures 10 to 12 is the same as the first embodiment of Figures 1 to 9 and the detailed description thereof is omitted.

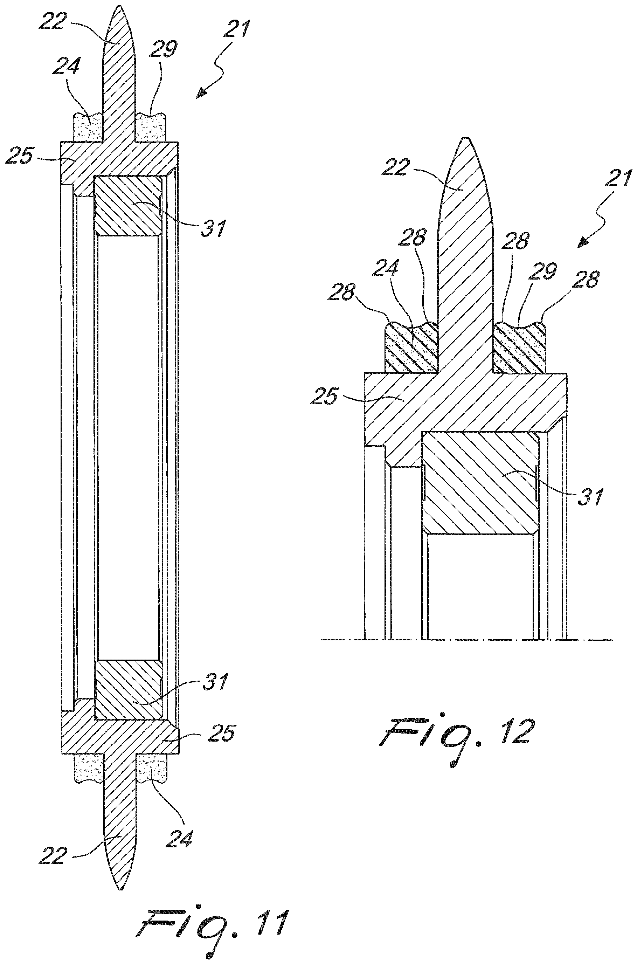

In the side view of Figure 10 the preferred antirotation means are shown in dashed lines in the circumferential support 25. As the radial extension 26 is omitted, the preferred circular outline of the circumferential support 25 is visible. Further, in the enlarged view of Figure 12, the chain roller 23 is omitted.

Although in the embodiments of Figures 10 to 12 the circumferential support 25 is shown as an element extending axially, i.e. in an axial direction, away from the face of the pulley 21, the circumferential support may also be embodied as a circumferential recess in the side face of the pulley 21. It is also envisaged that the circumferential support is embodied as combination of sections extending axially away from the pulley and circumferential recessed sections in the pulley. Any circumferential recess may be embodied, at least in part, as a through opening in the pulley.

The embodiments of Figures 1 to 12 are particularly suited when embodied as a guide pulley of a rear derailleur. Such a rear derailleur would be suited for chains 23 of a special type wherein the tops of the link plates are straight-line (flattops) which are known as AXS chains, as mentioned above. In a rear derailleur, the chain 23 is running with the straight tops over the guide pulley 102, as seen from Figures 3 or 10, and the straight tops are perfectly matching the straight portions of the polygonal cushioning ring 24 of the guide pulley 102. Accordingly, the impact of the chain 23 on the pulley 21 is smooth and silent.

The tension pulley 101 of such rear derailleur may be of any known type or may be or a similar type as described herein. In operation, the conventional part of the link plates of the AXS chain 23 will interact first with the tension pulley 101 and subsequently in a reverse orientation over the guide pulley 21, where the straight tops of the link plates of the chain 23 will cooperate with the straight portions of the guide pulley 21. Thus, the impact of the chain 23 at both pulleys is silent and smooth.

In the embodiments of Figures 1 to 12, the pulley 21 is of a type having a free space 30 in its center, as described in EP 20177531.9. In this case the pulley 21 will be mounted by mounting means (not shown) via an interposed roller bearing 31 to a single-plated cage of the rear derailleur. However, any conventional guide or tension pulley for a rear derailleur of a bicycle, wherein for instance the pulleys are rotatably mounted between two lateral plates of the cage on central bearings which are fitted on central bolts which connect two lateral plates of the cage to each other are envisaged as to be included in the scope of the present invention, as defined by the appended claims.

The disclosure of the present invention includes all modifications and equivalents of the subject matter recited in the claims appended hereto as permitted by applicable law. Moreover, any combination of the above-described elements in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize the disclosure may be embodied in other specific forms without departing from the disclosure or essential characteristics thereof. The foregoing embodiments are therefore to be considered illustrative rather than limiting to the disclosure described herein in all respects.

### List of references

- 21: pulley
- 22: tooth
- 23: roller chain
- 23a: outer link plate
- 23b: outer link plate
- 23a: chain roller
- 24: polygonal cushioning ring
- 25: circumferential support
- 26: radial extension
- 28: protrusion of the polygonal cushioning ring
- 29: recess of the polygonal cushioning ring
- 30: free space
- 31: roller bearing
- 32: antirotation means of the circumferential support
- 33: antirotation means of the polygonal cushioning ring
- 100: rear derailleur
- 101: tension pulley
- 102: guide pulley
- 103: cage
- 104: cassette

## Claims

1. A toothed pulley (21) for a bicycle rear derailleur (100), the pulley (21) carrying on each of its side faces a cushioning ring (24) made of an elastically deformable material and adapted to come in contact with link plates of a roller chain (23) running over the pulley (21), wherein
the pulley (21) includes respective circumferential supports (25) formed adjacent to or into each side face to the pulley (21), **characterized in that**
each cushioning ring (24) is supported in a rotationally secured manner at a respective circumferential support (25), and **in that**
in a side view of the pulley (21), as seen in the axial direction, each cushioning ring (24) is a polygonal cushion ring (24), having a polygonal outline at the face thereof facing the roller chain (23) and is provided by molding on the circumferential support (25), wherein the number of corners of the polygonal cushioning ring (24) is equal to the number of teeth (22) of the pulley (21), and wherein the corners of the polygonal cushioning ring (24) are angularly offset from the centers of the teeth (22) of the pulley (21) by the half angular distance between adjacent teeth (22) of the pulley (21).

2. The pulley (21) according to claim 1, wherein each circumferential support (25) extends axially away from the side face of the pulley (21), and wherein preferably the circumferential support (25) further includes a radial extension (26) which extends outwardly in a radial direction from the circumferential support (25) and which forms preferably a flange extending upwardly from the circumferential support (25); or
wherein each circumferential support (25) is provided as a circumferential recess in the side face of the pulley (21); or
wherein each circumferential support (25), in part, extends axially away from the side face of the pulley (21) and, in part, is provided as a circumferential recess in the side face of the pulley (21), and wherein preferably the extending part of the circumferential support (25) further includes a radial extension (26) which extends outwardly in a radial direction from the circumferential support (25).

3. The pulley (21) according to claim 1 or 2, wherein the circumferential support (25) and/or the radial extension (26) are made in one piece with the pulley (21).

4. The pulley (21) according to one or more of the preceding claims, wherein the circumferential support (25) is formed with an outline, as seen in the axial direction, which is different from the outline of the polygonal cushioning ring (24) at its face facing the roller chain (23).

5. The pulley (21) according to one or more of the preceding claims, wherein the circumferential support (25) is formed with a circular or with an elliptical outline, as seen in the axial direction, and wherein the circumferential support (25) is preferably formed with a circular shape.

6. The pulley (21) according to one or more of the claims 1 to 4, wherein the circumferential support (25) and/or the radial extension (26) are formed with a polygonal outline with rounded corners, as seen in the axial direction.

7. The pulley (21) according to one or more of the preceding claims, further including antirotation means (32, 33) for securing the polygonal cushioning ring (24) against a rotation with respect to the circumferential support (25), wherein antirotation means (32, 33) are provided by at least one radial recess of the circumferential support (25) and at least one fitting radial protrusion of the polygonal cushioning ring (24) and/or by at least one radial protrusion of the circumferential support (25) and at least one fitting radial recess of the polygonal cushioning ring (24).

8. The pulley (21) according to one or more of the preceding claims 1 to 6, further including antirotation means (32, 33) for securing the polygonal cushioning ring (24) against a rotation with respect to the circumferential support (25), wherein said antirotation means (32, 33) are provided by a sinuous, a crenelated or a cornered outline of the circumferential support (25), as seen in the axial direction, and a corresponding inner shape of the polygonal cushioning ring (24) at the face thereof facing the circumferential support (25).

9. The pulley (21) according to one or more of the preceding claims, wherein the polygonal cushioning ring (24) is provided on the circumferential support (25) of the pulley (21) by overmolding, or wherein
the pulley (21) is manufactured by means of two consecutive molding steps, wherein in a first molding step the pulley (21) with the circumferential support (25) is formed and wherein in a second molding step the polygonal cushioning ring (24) is formed on the circumferential support (25) of the pulley (21).

10. The pulley (21) according to one or more of the preceding claims, wherein the polygonal cushioning ring (24) comprises a number of straight portions equal to the number of teeth (22) of the pulley (21) and angularly aligned with one of the teeth (22) each.

11. The pulley (21) according to one or more of the preceding claims, wherein each polygonal cushioning ring (24) comprises, at least on its side facing of a roller chain (23) running over the pulley (21), a groove extending along its entire perimeter length, which groove, as seen in a cross-sectional view through the polygonal cushioning ring (24), is a recess (29) flanked by two protrusions (28), wherein the protrusions (28) are adapted and orientated to come in contact with outer and inner link plates, respectively, of the roller chain (23).

12. The pulley (21) according to claim 11, wherein in a cross-sectional view through the polygonal cushioning ring (24) the protrusions (28) are curved convexly and are connected contiguously by the recess (29) which is curved concavely, as seen from inside the polygonal cushioning ring.

13. The pulley (21) according to one or more of the preceding claims, wherein the pulley (21) is a guide pulley (102) for a bicycle rear derailleur (100).

14. A bicycle rear derailleur (100) comprising a cage (103) supporting a tension pulley (101) and a guide pulley (102) both being rotatably mounted on the cage (103), the cage (103) being movable with respect to the bicycle and adapted to guide a roller chain (23) in an S-shape, wherein the guide pulley (102) is devised according to one or more of claims 1 to 13.

15. The bicycle rear derailleur (100) according to claim 14, wherein at least one of the pulleys (101, 102) is rotatably mounted to the cage (103) by mounting means and an interposed radial bearing, wherein the mounting means are arranged so as to be spaced from the center of rotation of the pulley and are positioned along a circular mounting opening provided in the cage (103) spaced away from the center of rotation of the pulley, so as to leave a free space in the center of the pulley in its mounted state.

## Patentansprüche

1. Eine Zahnriemenscheibe (21) für eine Kettenschaltung (100) eines Fahrrads, wobei die Riemenscheibe (21) auf jeder ihrer Seitenflächen einen Dämpfungsring (24) trägt, der aus einem elastisch verformbaren Material besteht und ausgebildet ist, um in Kontakt mit Kettenlaschen einer Rollenkette (23) zu kommen, die über die Riemenscheibe (21) verläuft; wobei
die Riemenscheibe (21) entsprechende Umfangsstützen (25) einschließt, die angrenzend an oder in jede Seitenfläche der Riemenscheibe (21) hinein geformt sind; **dadurch gekennzeichnet, dass**
jeder Dämpfungsring (24) drehgesichert an einer entsprechenden Umfangsstütze (25) gelagert ist, und dadurch, dass
in einer Seitenansicht der Riemenscheibe (21), gesehen in die axiale Richtung, jeder Dämpfungsring (24) ein vieleckiger Dämpfungsring (24) ist, der an seiner der Rollenkette (23) zugewandten Seite einen vieleckigen Umriss hat und hergestellt wird durch Formen auf der Umfangsstütze (25), wobei die Anzahl der Ecken des vieleckigen Dämpfungsrings (24) gleich der Anzahl der Zähne (22) der Riemenscheibe (21) ist und wobei die Ecken des vieleckigen Dämpfungsrings (24) von den Zentren der Zähne (22) der Riemenscheibe (21) um den halben Winkelabstand zwischen benachbarten Zähnen (22) der Riemenscheibe (21) winklig versetzt sind.

2. Die Riemenscheibe (21) gemäß Anspruch 1, wobei jede Umfangsstütze (25) sich axial von der Seitenfläche der Riemenscheibe (21) fort erstreckt und wobei die Umfangsstütze (25) vorzugsweise weiter eine radiale Erweiterung (26) einschließt, welche sich in einer radialen Richtung von der Umfangsstütze (25) nach außen erstreckt und vorzugsweise einen Flansch bildet, der sich von der Umfangsstütze (25) aufwärts erstreckt; oder wobei jede Umfangsstütze (25) als Umfangsvertiefung in der Seitenfläche der Riemenscheibe (21) ausgebildet ist; oder
wobei jede Umfangsstütze (25) sich teilweise axial von der Seitenfläche der Riemenscheibe (21) fort erstreckt und teilweise als Umfangsvertiefung in der Seitenfläche der Riemenscheibe (21) angebracht ist und wobei der sich erstreckende Teil der Umfangsstütze (25) vorzugsweise weiter eine radiale Erweiterung (26) einschließt, die sich in einer radialen Richtung von der Umfangsstütze (25) nach außen erstreckt.

3. Die Riemenscheibe (21) gemäß Anspruch 1 oder 2, wobei die Umfangsstütze (25) und/oder die radiale Erweiterung (26) einteilig mit der Riemenscheibe (21) hergestellt sind.

4. Die Riemenscheibe (21) gemäß einem oder mehreren der obigen Ansprüche, wobei die Umfangsstütze (25), in axialer Richtung gesehen, mit einem Umriss versehen ist, der sich vom Umriss des vieleckigen Dämpfungsrings (24) auf seiner der Rollenkette (23) zugewandten Seite unterscheidet.

5. Die Riemenscheibe (21) gemäß einem oder mehreren der obigen Ansprüche, wobei die Umfangsstütze (25), in axialer Richtung gesehen, mit einem kreisförmigen oder elliptischen Umriss versehen ist und wobei die Umfangsstütze (25) vorzugsweise kreisförmig ist.

6. Die Riemenscheibe (21) gemäß einem oder mehreren der Ansprüche 1 bis 4, wobei die Umfangsstütze (25) und/oder die radiale Erweiterung (26), in axialer Richtung gesehen, mit einem vieleckigen Umriss mit gerundeten Ecken versehen sind.

7. Die Riemenscheibe (21) gemäß einem oder mehreren der obigen Ansprüche, die weiter Antirotationsmittel (32, 33) zur Sicherung des vieleckigen Dämpfungsrings (24) gegen eine Drehung mit Bezug auf die Umfangsstütze (25) einschließt, wobei Antirotationsmittel (32, 33) durch mindestens eine radiale Vertiefung der Umfangsstütze (25) und mindestens einen passenden radialen Vorsprung des vieleckigen Dämpfungsrings (24) und/oder durch mindestens einen radialen Vorsprung der Umfangsstütze (25) und mindestens eine passende radiale Vertiefung des vieleckigen Dämpfungsrings (24) bereitgestellt werden.

8. Die Riemenscheibe (21) gemäß einem oder mehreren der obigen Ansprüche 1 bis 6, die weiter Antirotationsmittel (32, 33) zur Sicherung des vieleckigen Dämpfungsrings (24) gegen eine Drehung mit Bezug auf die Umfangsstütze (25) einschließt, wobei die Antirotationsmittel (32, 33), in axialer Richtung gesehen, durch einen gewundenen, gezackten oder eckigen Umriss der Umfangsstütze (25) und eine entsprechende innere Form des vieleckigen Dämpfungsrings (24) an der der Umfangsstütze (25) zugewandten Seite davon gebildet sind.

9. Die Riemenscheibe (21) gemäß einem oder mehreren der obigen Ansprüche, wobei der vieleckige Dämpfungsring (24) auf der Umfangsstütze (25) der Riemenscheibe (21) durch Überformen hergestellt wird oder wobei
die Riemenscheibe (21) mittels zweier aufeinander folgender Formschritte hergestellt wird, wobei in einem ersten Formschritt die Riemenscheibe (21) mit der Umfangsstütze (25) geformt wird und in einem zweiten Formschritt der vieleckige Dämpfungsring (24) auf der Umfangsstütze (25) der Riemenscheibe (21) geformt wird.

10. Die Riemenscheibe (21) gemäß einem oder mehreren der obigen Ansprüche, wobei der vieleckige Dämpfungsring (24) eine Anzahl gerader Abschnitte umfasst, die gleich der Anzahl von Zähnen (22) der Riemenscheibe (21) ist, wobei sie winklig mit jeweils einem der Zähne (22) ausgerichtet sind.

11. Die Riemenscheibe (21) gemäß einem oder mehreren der obigen Ansprüche, wobei jeder vieleckige Dämpfungsring (24) mindestens auf seiner Seite, die einer Rollenkette (23) zugewandt ist, welche über die Riemenscheibe (21) verläuft, eine Nut umfasst, die sich über die Länge ihres gesamten Umfangs erstreckt, wobei die Nut, gesehen in einer Querschnittsansicht durch den vieleckigen Dämpfungsring (24), eine von zwei Vorsprüngen (28) flankierte Vertiefung (29) ist, wobei die Vorsprünge (28) ausgebildet und ausgerichtet sind, um in Kontakt mit äußeren beziehungsweise inneren Kettenlaschen der Rollenkette (23) zu kommen.

12. Die Riemenscheibe (21) gemäß Anspruch 11, wobei in einer Querschnittsansicht durch den vieleckigen Dämpfungsring (24) die Vorsprünge (28) konvex gekrümmt und durchgehend durch die Vertiefung (29) verbunden sind, welche, von der Innenseite des vieleckigen Dämpfungsrings gesehen, konkav gekrümmt ist.

13. Die Riemenscheibe (21) gemäß einem oder mehreren der obigen Ansprüche, wobei die Riemenscheibe (21) eine Umlenkscheibe (102) für eine Kettenschaltung (100) eines Fahrrads ist.

14. Eine Kettenschaltung (100) eines Fahrrads, die einen Käfig (103) umfasst, welcher eine Spannrolle (101) und eine Umlenkscheibe (102) trägt, die beide drehbar am Käfig (103) montiert sind, wobei der Käfig (103) im Verhältnis zum Fahrrad beweglich und ausgebildet ist, um eine Rollenkette (23) in S-Form zu führen, wobei die Umlenkscheibe (102) gemäß einem oder mehreren der Ansprüche 1 bis 13 konstruiert ist.

15. Die Kettenschaltung (100) eines Fahrrads gemäß Anspruch 14, wobei mindestens eine der Riemenscheiben (101, 102) mit Hilfe von Montagemitteln und eines zwischengeschalteten Querlagers drehbar am Käfig (103) montiert ist; wobei die Montagemittel vom Rotationszentrum der Riemenscheibe beabstandet angeordnet und entlang einer im Käfig (103) angebrachten kreisförmigen Montageöffnung, vom Rotationszentrum der Riemenscheibe beabstandet, positioniert sind, um einen Freiraum im Zentrum der Riemenscheibe in ihrem montierten Zustand zu lassen.

## Revendications

1. Poulie dentée (21) pour un dérailleur arrière de bicyclette (100), la poulie (21) portant sur chacune de ses faces latérales un anneau d'amortissement (24) constitué d'un matériau élastiquement déformable et adapté pour venir en contact avec des plaques de liaison d'une chaîne à galets (23) passant sur la poulie (21), dans laquelle
la poulie (21) inclut des supports circonférentiels (25) respectifs formés de façon adjacente à ou dans chaque face latérale de la poulie (21), **caractérisée en ce que**
chaque anneau d'amortissement (24) est supporté de façon solidaire en rotation sur un support circonférentiel (25) respectif, et **en ce que**
dans une vue latérale de la poulie (21), depuis la direction axiale, chaque anneau d'amortissement (24) est un anneau d'amortissement polygonal (24), lequel présente un contour polygonal au niveau de la face de celui-ci tournée vers la chaîne à galets (23), et est réalisé par moulage sur le support circonférentiel (25), dans laquelle le nombre de coins de l'anneau d'amortissement polygonal (24) est égal au nombre de dents (22) de la poulie (21), et dans laquelle les coins de l'anneau d'amortissement polygonal (24) sont décalés de façon angulaire par rapport aux centres des dents (22) de la poulie (21) selon la moitié de la distance angulaire entre des dents (22) adjacentes de la poulie (21) .

2. Poulie (21) selon la revendication 1, dans laquelle chaque support circonférentiel (25) s'étend axialement à distance de la face latérale de la poulie (21), et dans laquelle le support circonférentiel (25) inclut de préférence en outre une extension radiale (26), laquelle s'étend vers l'extérieur dans une direction radiale à partir du support circonférentiel (25) et forme de préférence une bride s'étendant vers le haut à partir du support circonférentiel (25) ; ou
dans lequel chaque support circonférentiel (25) est réalisé comme une cavité circonférentielle dans la face latérale de la poulie (21) ; ou
dans lequel chaque support circonférentiel (25) s'étend en partie axialement à distance de la face latérale de la poulie (21) et est en partie réalisé comme une cavité circonférentielle dans la face latérale de la poulie (21), et dans laquelle la partie étendue du support circonférentiel (25) inclut de préférence en outre une extension radiale (26), laquelle s'étend vers l'extérieur dans une direction radiale à partir du support circonférentiel (25).

3. Poulie (21) selon la revendication 1 ou 2, dans laquelle le support circonférentiel (25) et/ou l'extension radiale (26) sont constitués d'une seule pièce avec la poulie (21).

4. Poulie (21) selon l'une ou plusieurs des revendications précédentes, dans laquelle le support circonférentiel (25) est formé avec un contour, vu dans la direction axiale, lequel est différent du contour de l'anneau d'amortissement polygonal (24) au niveau de sa face tournée vers la chaîne à galets (23).

5. Poulie (21) selon l'une ou plusieurs des revendications précédentes, dans laquelle le support circonférentiel (25) est formé avec un contour circulaire ou elliptique, vu dans la direction axiale, et dans laquelle le support circonférentiel (25) présente de préférence une forme circulaire.

6. Poulie (21) selon l'une ou plusieurs des revendications 1 à 4, dans laquelle le support circonférentiel (25) et/ou l'extension radiale (26) sont formés avec un contour polygonal avec des coins arrondis, vus dans la direction axiale.

7. Poulie (21) selon l'une ou plusieurs des revendications précédentes, incluant en outre des moyens anti-rotation (32, 33) destinés à bloquer l'anneau d'amortissement polygonal (24) en rotation par rapport au support circonférentiel (25), dans laquelle les moyens anti-rotation (32, 33) sont constitués d'au moins une cavité radiale du support circonférentiel (25) et d'au moins une saillie radiale d'ajustement de l'anneau d'amortissement polygonal (24) et/ou d'au moins une saillie radiale du support circonférentiel (25) et d'au moins une cavité radiale d'ajustement de l'anneau d'amortissement polygonal (24).

8. Poulie (21) selon l'une ou plusieurs des revendications précédentes 1 à 6, incluant en outre des moyens anti-rotation (32, 33) destinés à bloquer l'anneau d'amortissement polygonal (24) en rotation par rapport au support circonférentiel (25), dans laquelle lesdits moyens anti-rotation (32, 33) sont constitués d'un contour sinueux, crénelé ou angulaire du support circonférentiel (25), vus dans la direction axiale, et d'une forme intérieure correspondante de l'anneau d'amortissement polygonal (24) au niveau de la face de celui-ci tournée vers le support circonférentiel (25).

9. Poulie (21) selon l'une ou plusieurs des revendications précédentes, dans laquelle l'anneau d'amortissement polygonal (24) est réalisé sur le support circonférentiel (25) de la poulie (21) par surmoulage, ou dans laquelle
la poulie (21) est fabriquée au moyen de deux étapes de moulage consécutives, dans laquelle, dans une première étape de moulage, la poulie (21) est formée avec le support circonférentiel (25) et dans laquelle, dans une deuxième étape de moulage, l'anneau d'amortissement polygonal (24) est formé sur le support circonférentiel (25) de la poulie (21).

10. Poulie (21) selon l'une ou plusieurs des revendications précédentes, dans laquelle l'anneau d'amortissement polygonal (24) comprend un certain nombre de portions droites égal au nombre de dents (22) de la poulie (21), lesquelles sont respectivement alignées avec l'une des dents (22).

11. Poulie (21) selon l'une ou plusieurs des revendications précédentes, dans laquelle chaque anneau d'amortissement polygonal (24) comprend, au moins sur sa face tournée vers une chaîne à galets (23) passant sur la poulie (21), une rainure s'étendant le long de toute la longueur de son périmètre, ladite rainure, dans une vue en section transversale à travers l'anneau d'amortissement polygonal (24), étant une cavité (29) bordée par deux saillies (28), dans laquelle les saillies (28) sont adaptées et orientées pour venir en contact avec des plaques de liaison extérieure et intérieure, respectivement, de la chaîne à galets (23).

12. Poulie (21) selon la revendication 11, dans laquelle, dans une vue en section transversale à travers l'anneau d'amortissement polygonal (24), les saillies (28) sont incurvées de façon convexe et sont reliées de façon contiguë par la cavité (29) incurvée de façon concave, vues depuis l'intérieur de l'anneau d'amortissement polygonal.

13. Poulie (21) selon l'une ou plusieurs des revendications précédentes, dans laquelle la poulie (21) est une poulie de guidage (102) pour un dérailleur arrière de bicyclette (100).

14. Dérailleur arrière de bicyclette (100) comprenant une cage (103) supportant une poulie de tension (101) et une poulie de guidage (102) toutes deux montées de façon rotative sur la cage (103), la cage (103) étant déplaçable par rapport à la bicyclette et adaptée pour guider une chaîne à galets (23) en forme de S, dans lequel la poulie de guidage (102) est conçue selon l'une ou plusieurs des revendications 1 à 13.

15. Dérailleur arrière de bicyclette (100) selon la revendication 14, dans lequel l'une au moins des poulies (101, 102) est montée de façon rotative sur la cage (103) par des moyens de montage et un palier radial intercalé, dans lequel les moyens de montage sont agencés de manière à être espacés par rapport au centre de rotation de la poulie et sont positionnés le long d'une ouverture de montage circulaire disposée dans la cage (103) à distance du centre de rotation de la poulie, de manière à laisser un espace libre au centre de la poulie dans son état monté.
